# EUROPEAN PATENT APPLICATION

(11) **EP 3 115 665 A1**
(43) Date of publication of application: **11.01.2017**
(21) Application number: 16177907.9
(22) Date of filing: 05.07.2016
(51) Int. Cl.: F16K 31/524, F16K 31/53, F16K 37/00, F16K 31/04, F24D 19/10

(54) **DRIVE UNIT FOR A DIVERTER VALVE FOR A CENTRAL HEATING SYSTEM**

(30) Priority: 10.07.2015 DE 102015111253
(71) Applicant: Johnson Electric S.A., 3280 Murten (CH)
(72) Inventor: Knaebel, Heiko, Shatin, N.T. (HK); Pahner, Daniel, Shatin, N.T. (HK)
(74) Representative: Hocking, Adrian Niall

(57) **Abstract**

A drive unit (1) for translational actuation of a diverter valve for heating devices has an electric motor (3), a gearbox which converts the rotational movement of the motor into a stroke movement for a valve shaft (4), and a switch (14) for switching off the motor when the valve shaft is at the valve end positions. The electrical motor (3) is a synchronous motor. The valve shaft (4) translationally moves a sealing element (8) between the two end positions and is stoppable in at least one predetermined intermediate position.

## Description

### FIELD OF THE INVENTION

This invention relates to an actuator or drive unit for a diverter valve for a central heating system and in particular, to an actuator providing the diverter valve with at least one intermediate stop position.

### BACKGROUND OF THE INVENTION

A diverter valve is used in central heating systems to divert the flow of hot working fluid, typically water, between two flow circuits, one for space heating and the other for heating a hot water supply. The diverter valve has one inlet and two outlets and the valve element is moved by an actuator between two set positions, in which the inlet is connected to one or the other of the two outlets, diverting the working fluid to either the space heating circuit or the water heating circuit. The actuator typically comprises an electric motor and a gear box.

A motor-actuated diverter valve is usually switched via two electric connections, the valve is moved into one end position by one connection and into the other end position with the other connection. Synchronous motors have proven themselves as rotating electrical drives due to the simple actuation, the motor characteristic curve, and the inexpensive availability.

It is known from DE4230341 to retrofit an electric motor drive to a ball valve using a cam disk and two microsensors.

An electric motor adjustment device for a longitudinally displaceable drive element of a fluid valve is known from GB2316152, in which a first and a second switch are incorporated in the housing, are alternatingly connected to the motor via an external switch device, and each contains moveable contact elements which interact with the radial cam profiles of a rotatable drive element in such a way that, when the external switching device is set in a first switching state, then the motor is started if the longitudinally displaceable drive element is located in the first position, and the motor is switched off if the drive element has reached the second position, and vice versa.

US8393595 discloses a further refinement, which distinguishes itself in that the two separate contact devices are replaced by a single contact whip-type switching element, which functions in a cam-driven way alternatingly using two fixed contacts insulated with respect to one another.

The known contact-controlled motor adjustment devices enable only a changeover switch to one or another end position; the valve is either OPEN or CLOSED, or, in the case of 3/2 valves, one flow path is OPEN, the other flow path is CLOSED. The latter means that for 3/2 valves in heating systems, that the burner for the heating system heats either hot water or heating water, thus never the two simultaneously. However, it has proven desirable for the cooler seasons that, in the case of a longer-lasting consumption of hot water, e.g., several people shower or bathe directly one after another, the heating circuit would also be fired at this time in order to maintain a comfortable room temperature. This means that the heating device valve has to be upgraded, preferably without increased installation work at the heating system, to enable a simultaneous flow path for both fluid flows, heating water and hot water.

Valves are known, in which the motor drive is carried out using stepper motors, wherein every intermediate point of a valve is actuatable, in principle; however, stepper motors require a substantially more complex actuation and a controlled voltage supply. Synchronous motors in motorized valves, in contrast, function directly using a 230 V mains network and a simple relay suffices for actuation. However, at the moment they may only be automatically switched off at the two end positions of a valve.

### SUMMARY OF THE INVENTION

Hence there is a desire for an actuator or drive unit for a diverter valve in which the valve can be stopped at defined intermediate positions between the ends of travel, in order to enable, e.g., simultaneous heating of heating water and hot water in the household.

Accordingly, in one aspect thereof, the present invention provides a drive unit for translational actuation of a diverter valve for heating devices, comprising an electric motor, a gearbox which converts the rotational movement of the motor into a stroke movement for a valve shaft, and a switching gate control actuated by the motor for switching off the motor in the valve end positions, wherein the switching gate control enables another switching off of the motor in at least one valve position between the two end positions.

Preferably, a switching off of motor is designed in the valve end positions and the valve midpoint position.

Preferably, the switching gate control comprises at least one rotating switching gate which switches at least one switching element.

Preferably, each rotating switching gate switches one switching element or multiple switching elements, which are disposed offset from one another at a defined angle and are arranged tangential to the switching gates.

Preferably, the gearbox includes a rotary sliding mechanism having a crank disk, and the at least one rotating switching gate directly integrated into the crank disk or is configured as a separate switching gate wheel which is arranged rotationally fixed with respect to the crank disk.

Preferably, the motor is a synchronous motor, a spur gear transmission is arranged for reducing the rotational speed between the motor and the rotary sliding mechanism, and at least one switching gate is arranged which engages with the reducing transmission, and the at least one switching element is configured to be switchable by a shifting cam of the switching gate.

Preferably, the switching gate control comprises at least one switching gate which is moved translationally with the valve shaft and switches at least one electric switching element.

Preferably, a start up of the motor from one of the valve end positions or an intermediate valve position is carried out by means of a start up pulse from a higher-level authority of the heating device management.

Preferably, the motor is a synchronous motor.

According to a second aspect, the present invention provides a method for translational actuation of a diverter valve for heating devices by means of an electric motor, a gearbox, and a switching off of the motor in the valve end positions, wherein at least one additional switching off of the motor is carried out in an intermediate valve position.

Preferably, one of the at least one additional switching off of the motor is carried out in the valve midpoint position.

Preferably, a switching on of the motor for travel out of the respective intermediate valve position is carried out by means of a start up pulse from a higher-level authority of the heating device management.

Using the solution according to the invention, defined intermediate positions may also be approached using an ON/OFF drive, such as a defined midpoint between the two end positions. Thus, in one valve, the water may flow into the heat exchanger for hot water from the tap and also into the radiator circuit. By this means, a house is heated even if a requirement for hot water is applied for a longer period. This is possible even using the currently conventional plug and control circuit with an already present switch; only the control sequence needs to be changed.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labelled with a same reference numeral in all the figures in which they appear. Dimensions of components and features shown in the figures are generally chosen for convenience and clarity of presentation and are not necessarily shown to scale. The figures are listed below.
Figure la shows a highly schematic depiction of a combined system for hot water supply using a valve according to the invention in the feed line of the system;
Figure 1b shows a highly schematic depiction of a combined system for hot water supply using a valve according to the invention, in the return line of the system;
Figure 2 is a view of an opened drive unit for a 3-way diverter valve;
Figure 3 is a plan view of the drive unit of Figure 2;
Figures 4a & 4b show a side view and an end view of a crank disk comprising a switching gate with shifting cams;
Figure 5 is a view of the drive unit showing electrical connections thereof;
Figure 6 shows a first embodiment variant for switching the drive motor;
Figure 7 shows a second embodiment variant for switching the drive motor;
Figure 8 shows a third embodiment variant for switching the drive motor;
Figure 9 shows a fourth embodiment variant for switching the drive motor;
Figure 10 shows a fifth embodiment variant for switching the drive motor; and
Figure 11 shows a sixth embodiment variant for switching the drive motor.

### DETAILED DESCRIPTION OF THE PREFERRED EMBODIMENTS

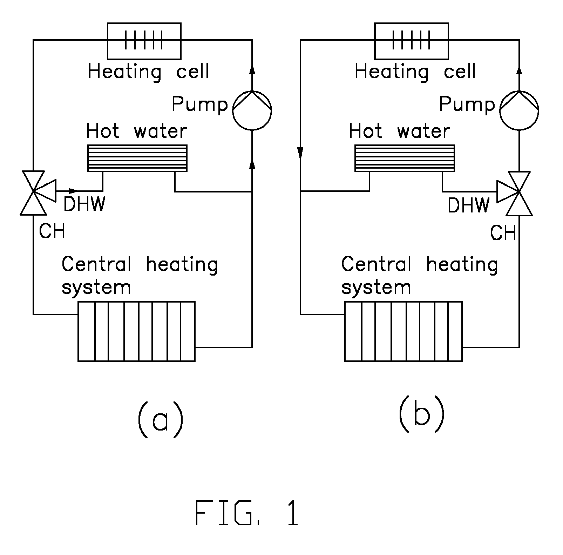

Figure 1 shows a highly schematic depiction of a heating system for supplying a household with hot water and heating water.

According to Figure 1a, a 3-way diverter valve (also known as a switch valve) is arranged in the feed line of the system, thus at the outlet of the heating cell, which is, for example, a gas or oil burner. Using the valve, the hot water heated in the burner may be pumped in the feed line via a first flow path CH through the central heating system comprising the radiators and back to the return line of the heating cell, or the valve is switched and the hot water circulates through a second flow path DHW through the heat exchanger for hot water and back to the return line of the heating cell via the pump.

In Figure 1b, the 3-way diverter valve is disposed in the return line of the system. The valve is switched to either hot water as heating water via the central heating system comprising radiators and the pump back to the return line of the heating cell, or the hot water is switched via the heat exchanger for hot water and the pump back to the return line of the heating cell.

According to the prior art, the valve allows for only a changeover switch from a hot water or a heating water operation for the two switching cases. Using the disclosed invention, in contrast, the opportunity is created that the valve allows hot water and heating water operation at one and the same time for both switching cases, in that, in addition to the two end positions of the valve, the valve can assume a fixed intermediate position in which both hot water and heating water are heated at the same time. The desired operation may be controlled using software with the aid of a higher-level authority. Living comfort is increased using a simultaneous circulation of hot water through both fluid circuits.

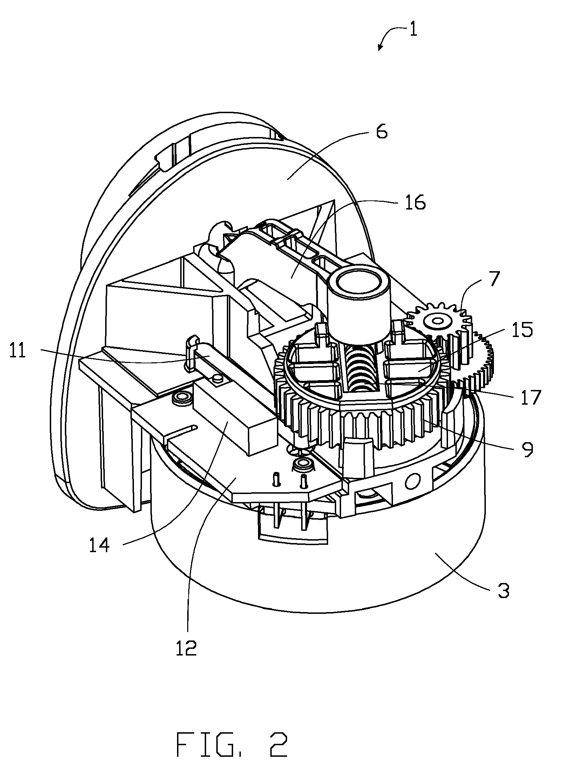

Figure 2 shows the internal structure of a drive unit 1 with a rotary sliding mechanism, in this case designed as a slider crank mechanism comprising an interposed spur gear transmission 7, which is driven via the shaft of motor 3. The entire gearbox is fixed to a main plate 6, the base of which is designed such that it may be coupled in a simple way at the actual changeover valve via a bayonet fitting. The main plate 6 simultaneously takes on a housing function. At least one electrical switching element 14, which may be switched via a switch lever 11, sits on a wiring plate 12 supported by the main plate 6. Wiring plate 12 may be a PCB. Switch lever 11 itself is mounted on main plate 6. Crank disk 15 of the rotary sliding mechanism is driven by spur gear transmission 7 and supports a switching gate 9 on its bottom side. Using switching gate 9, switching element 14 is actuated via switch lever 11 during rotation of crank disk 15 around its axis. Crank disk 15 additionally actuates a crank arm 16 of the slider crank mechanism during rotation in a way that will be subsequently explained in greater detail.

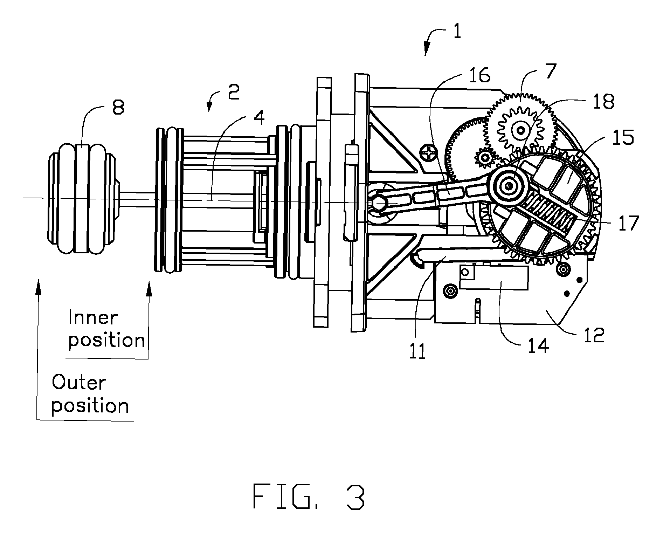

A view of drive unit 1 and valve cartridge 2 is graphically depicted in Figure 3 with the valve housing removed. The transmission of drive unit 1 is driven by motor 3 (not visible here). Motor 3 drives crank disk 15 via spur gear transmission 7; on the underside, crank disk 7 supports switching gate 9 with the shifting cams thereof. The shifting cams actuate electric switching element 14, in this case a microswitch, via switch lever 11. A spring element 17 is mounted in the interior of crank disk 15. This spring element 17 is supported on one side at a fixed point of crank disk 15. At the other end of spring element 17, a bearing pin 18 is guided radially moveably in crank disk 15. The crank arm 16 is mounted on bearing pin 18 and is the means by which a connecting rod bearing is connected to the valve shaft, on the end of which a sealing element 8 is seated. Due to this structure, it is possible that, due to the continuous rotational movement of the engine shaft and thus of crank disk 15 on valve shaft 4 and sealing element 8 by means of the spring-loaded mounting and guiding of crank arm 16, a bidirectional translational movement and also a non-linear travel/time motion and/or a non-linear travel/force characteristic are exerted. After switching off of motor 3, a specified closing force subsequently always functions on sealing element 8 and guarantees a reliable sealing of the valve in the inner position or outer position thereof.

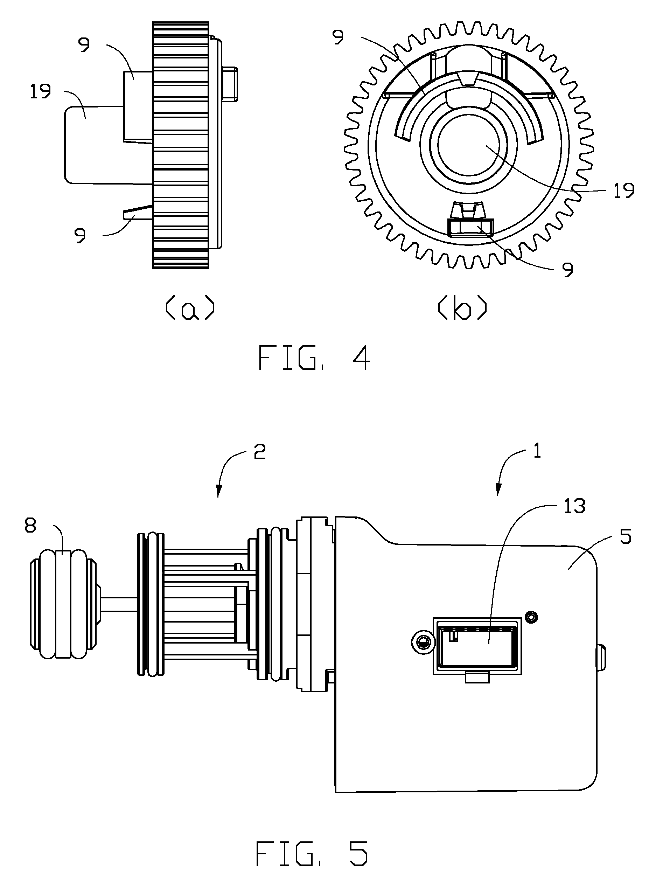

Crank disk 15 with switching gate 9 thereof is drawn as an individual part in Figure 4. Crank disk 15 supports a gear rim on the periphery thereof which is engaged with spur gear transmission 7. Switching gate 9, formed as circular arc and comprising shifting cams, is located on the bottom side and/or top side of crank disk 15. A boss 19 is formed on the bottom side, defining the central axis of rotation of the crank disk 15.

Figure 5 shows drive unit 1 housed in a housing 5 and valve cartridge 2. Housing 5 has an opening for a plug to be inserted to mate with electrical connections 13. Connections 13 are internally connected using wiring and relays of motor 3 to electrical switching element 14 or electrical switching elements 14 and, if necessary, to electronic elements. The plug leads to an electronic control as a higher-order authority for heating management in the heating device.

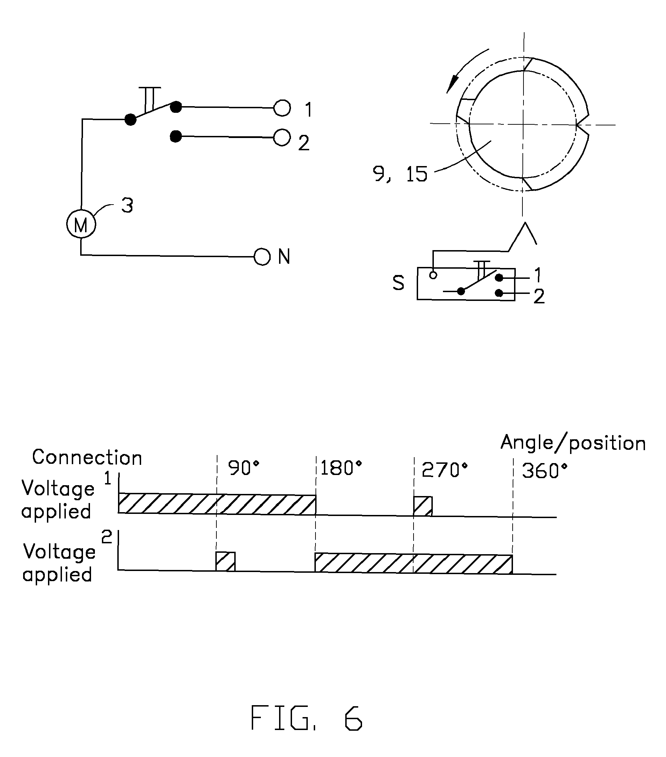

Figures 6 through 11 disclose different embodiment variants which enable, according to the invention, that the switch valve may switch over not only from an inner into an outer end position and vice versa, but may also assume a predetermined or defined intermediate position of the valve. A correspondingly configured switching gate 9 rotated along with and by crank disk 15, together with a geometric arrangement and the fitting of switching elements 14, actuated by switching gate 9, with respect to the angular orientation of switching elements 14 to switching gate 9 and an external control electrics/electronics.

In all examples, crank disk 15 of a rotary sliding mechanism directly supports switching gate 9 for switching motor 3 using corresponding shifting cams of switching gate 9. The shifting cams may, however, also be supported by separate ratchet wheels which revolve on the axis of crank disk 15 and rotate equally with the same. It should be emphasized that the person skilled in the art has the discretion to select another gearbox or a ratchet wheel rotating on its own axis which is driven by the gearbox, without exceeding the field of the invention.

A circuit diagram is depicted for each embodiment variant for energizing motor 3 of drive unit 1, which is operated by the switching gate(s) 9 rotating simultaneously with crank disk 15. The shifting cams of switching gate(s) 9, which are mounted on the top and/or bottom side of crank disk 15, actuate, according to the configuration of the specific embodiment variant, one or more electrical switching elements 14. An associated voltage graph shows the electrical switching of the connections over a 360° revolution of crank disk 15 and thus of switching gate(s) 9 in the direction of rotation indicated by an arrow in each case. Valve shaft 4 with sealing element 8 fixed on the end side is actuated via crank arm 16. One 360° revolution of crank disk 15 corresponds to a complete forward and return stroke of valve shaft 4 into the two end positions thereof. The shifting cams of switching gate 9 respectively switch motor 3 into the two end positions of the valve and into the midpoint position thereof according to the invention.

A first embodiment variant according to Figure 6 has a three-pin connection 1, 2 and N, a switching gate 9 in a plane of crank disk 15 and a changeover switch S via which connections 1, 2 the motor M may be energized. Changeover switch S is actuated by shifting cams of switching gate 9 during the rotation of crank disk 15, which is driven by motor 3 via a reduction gearbox 7. If voltage is applied at connection 1 of changeover switch S, then crank disk 15 with switching gate 9 rotates in the direction of the arrow. Switch S opens after a 90° rotation of crank disk 15 as a result of the approach to a very short shifting cam and switches over to connection 2. This is the intermediate valve position. To continue traveling from the standstill, a short voltage pulse is applied at connection 2 from a higher-level authority of the heating system. Crank disk 15 and thus switching gate 9 are rotated up to 180° and stopped then automatically as a result of the approach of changeover switch S to a long shifting cam which extends across a 180° circular arc. For the continued travel from 180° to 360°, voltage must therefore be switched from connection 1 to connection 2. In the intermediate position, thus at 270°, however, crank disk 15 stops again, because at this point the long shifting cam has a notch at which changeover switch S changes over from connection 2 to connection 1. Only with a short switching pulse via connection 1 does crank disk 15 rotate further. The lower voltage/crank disk rotation diagram shows again at which points the operating voltage is applied. It shows the switching behaviour across a full crank disk rotation.

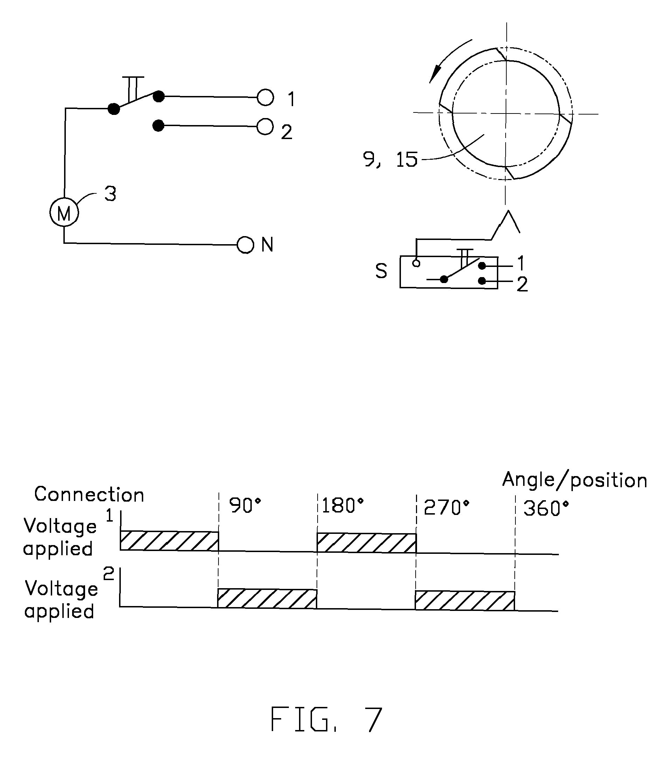

A second embodiment variant according to Figure 7 likewise has a three-pin connection 1, 2, N, a switching gate 9 in one plane and a changeover switch S via which connections 1, 2 motor 3 may be energized. Specifically, switching gate 9 supports two diametrically opposite shifting cams, each having a circular arc of extension of 90°. According to the depiction, crank disk 15 rotates as soon as voltage is applied to connector 1 of switch S. After a 90° rotation of crank disk 15, changeover switch S changes from connection 1 to connection 2. Crank disk 15 stops automatically. The switching system changes the assignment every 90°. The lower diagram shows again the switching behaviour across a complete crank disk rotation.

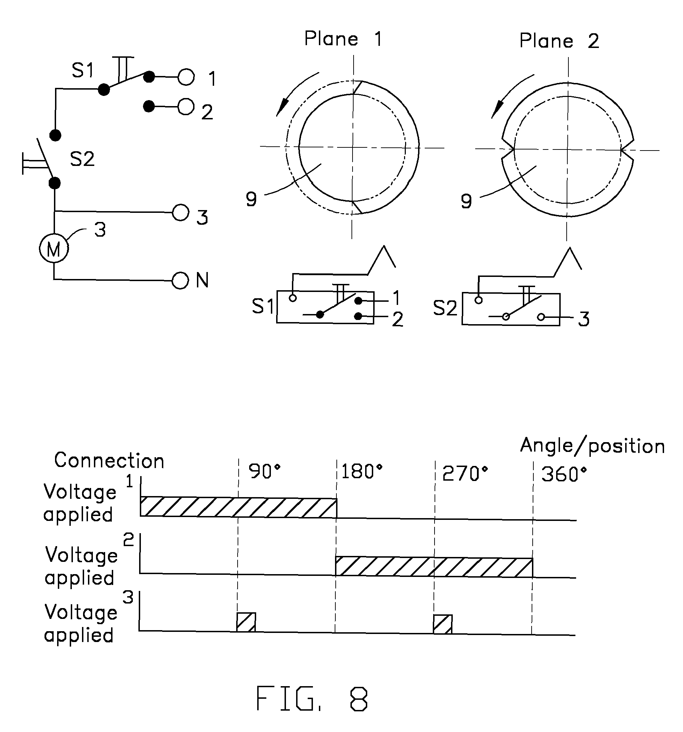

A third embodiment variant according to Figure 8 differs from the two previous ones due to a four-pin connection, a crank disk 15 with two switching gates 9 in two planes, and an ON-OFF switch S2 in addition to changeover switch S1. In the first plane 1, the crank disk supports a long shifting cam which extends over a 180° circular arc, and in the second plane 2, a shifting cam extends over the entire circular periphery of switching gate 9 and has diametrically opposite notches, by which means the long shifting cam is divided into two halves which lie offset to the shifting cam of first plane 1 by 90°. Plane 1 stops the rotational movement of crank disk 15 at 180° and 360°, thus in the inner and outer positions of sealing element 8. Using plane 2, the electrical circuit is interrupted at positions 90° and 270° using switch S2. If a short switching pulse is applied at additional connection 3, crank disk 15 moves further from the midpoint position. The diagram again shows the switching behaviour across a complete crank disk rotation.

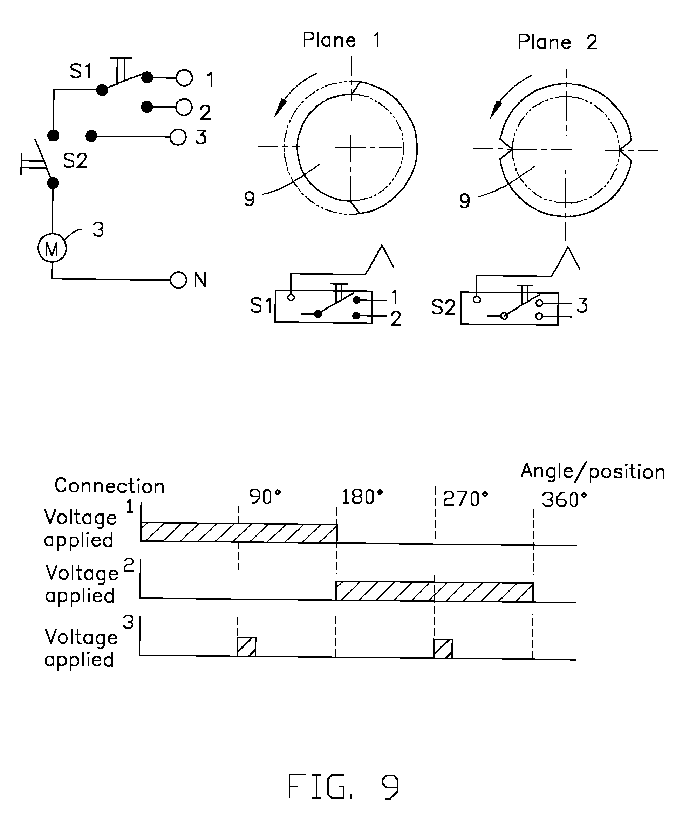

A fourth embodiment variant according to Figure 9 differs from the third variant only in that in plane 2, crank disk 15 connects a changeover switch S2 in one switch position to connection 1 or connection 2, and to connection 3 in the other switch position. By this means, crank disk 15 is automatically stopped in the midpoint position. If voltage is continuously applied at connection 3, the midpoint position may be switched off. The valve passes from one end position through to the other. The diagram again shows the switching behaviour over a complete crank disk rotation.

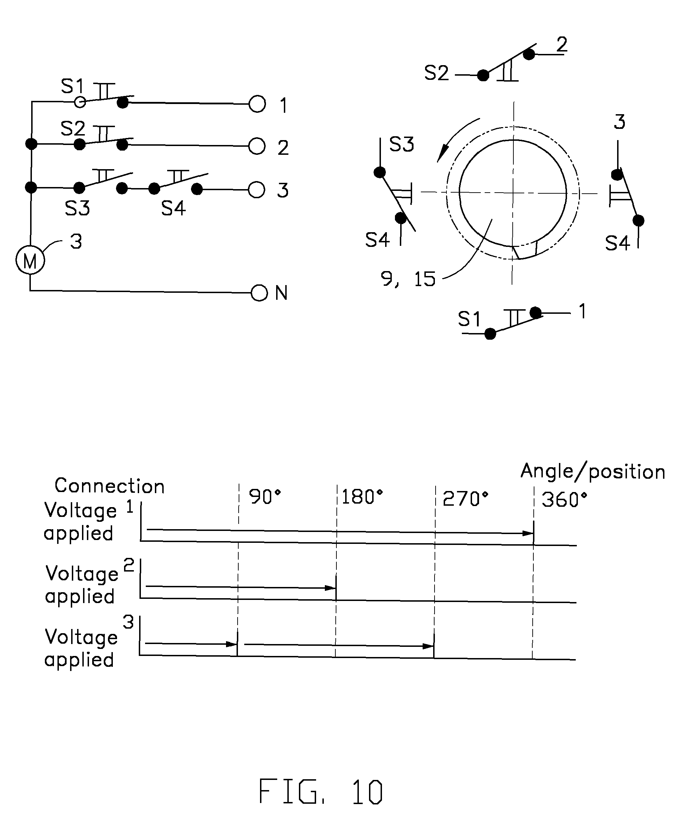

A fifth embodiment variant according to Figure 10 has a four-pin connection 1, 2, 3, N, a switching gate 9 in one level, and four open switching elements S1 - S4. Switching gate 9 of crank disk 15 has only one short shifting cam. A first switch S1 switches motor 3 to connection 1, a second switch S2 switches motor 3 to connection 2, a third switch S3 and a fourth switch S4 are switched in series and switch motor 3 to connection 3. All switches are arranged offset by 90° with respect to crank disk 15. If voltage is applied at connection 1, then the motor switches off at 360°. If voltage is applied at connection 2, the motor rotates to the 180° position. The midpoint position (90°; 270°) is achieved by applying the voltage to connection 3. The diagram again shows the switching behaviour over a complete crank disk rotation.

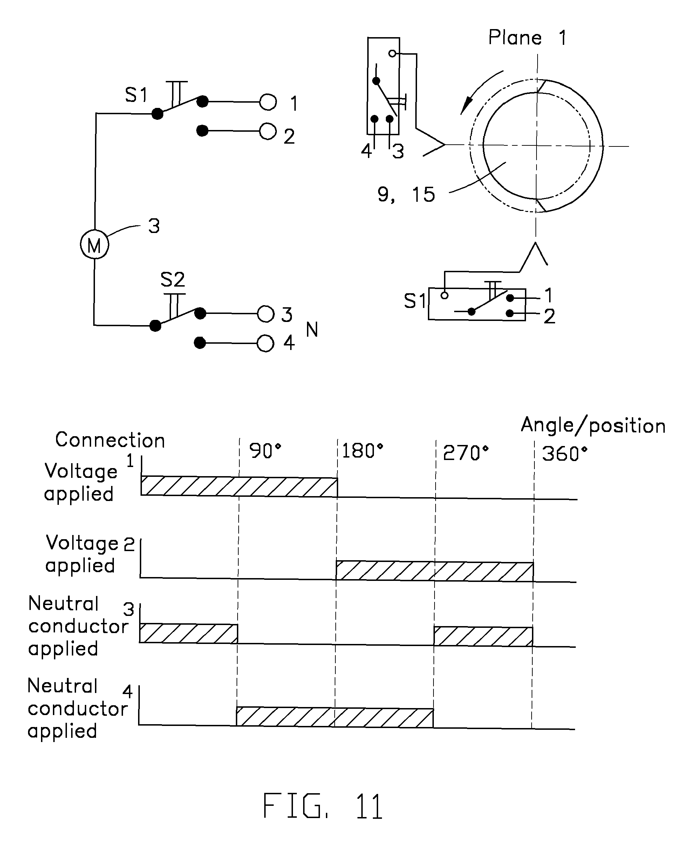

Finally, a sixth embodiment variant according to Figure 11 shows a four-pin connection 1, 2, 3, 4, a switching gate 9 in one plane of crank disk 15, and two changeover switches S1, S2. One changeover switch S1 switches motor 3 from connection 1 to connection 2, and the other changeover switch S2 switches from connection 3 to connection 4. Both changeover switches S1, S2 are offset by 90° to crank disk 15. Crank disk 15 supports a continuous 180° cam. Due to a combination of the connection assignment - either connection 1 or connection 2 are assigned to voltage and either connection 3 or connection 4 are assigned to the neutral conductor - the positions are formed of both end positions and the midpoint position of crank disk 15. The diagram again shows the switching behaviour across a complete crank disk rotation.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. A drive unit for translational actuation of a diverter valve for heating devices, comprising an electric motor (3), a gearbox (10) which converts the rotational movement of the motor (3) into a stroke movement for a valve shaft (4), and a switching gate control actuated by the motor (3) for switching off the motor (3) in the valve end positions,
**characterized in that** the switching gate control enables another switching off of the motor (3) in at least one valve position between the two end positions.

2. A drive unit according to Claim 1, wherein a switching off of motor (3) is designed in the valve end positions and the valve midpoint position.

3. A drive unit according to Claim 1 or 2, wherein the switching gate control comprises at least one rotating switching gate (9) which switches at least one switching element (14).

4. A drive unit according to Claim 3, wherein each rotating switching gate (9) switches one switching element (14) or multiple switching elements (14), which are disposed offset from one another at a defined angle and are arranged tangential to the switching gates (9).

5. A drive unit according to Claim 3 or 4, wherein the gearbox includes a rotary sliding mechanism (10) having a crank disk (15), and the at least one rotating switching gate (9) directly integrated into the crank disk (15) or is configured as a separate switching gate wheel which is arranged rotationally fixed with respect to the crank disk (15).

6. A drive unit according to Claim 5, wherein the motor (3) is a synchronous motor, a spur gear transmission (7) is arranged for reducing the rotational speed between the motor (3) and the rotary sliding mechanism (10), and at least one switching gate (9) is arranged which engages with the reducing transmission (7), and the at least one switching element (14) is configured to be switchable by a shifting cam of the switching gate.

7. A drive unit according to Claim 1 or 2, wherein the switching gate control comprises at least one switching gate (9) which is moved translationally with the valve shaft (4) and switches at least one electric switching element (14).

8. A drive unit according to any one of Claims 1 to 7, wherein a start up of the motor (3) from one of the valve end positions or an intermediate valve position is carried out by means of a start up pulse from a higher-level authority of the heating device management.

9. A drive unit according to any one of Claims 1 to 8, wherein the motor (3) is a synchronous motor.

10. A method for translational actuation of a diverter valve for heating devices by means of an electric motor (3), a gearbox (10), and a switching off of the motor (3) in the valve end positions,
**characterized in that** at least one additional switching off of the motor (3) is carried out in an intermediate valve position.

11. A method according to Claim 10, **characterized in that** one of the at least one additional switching off of the motor (3) is carried out in the valve midpoint position.

12. A method according to Claim 10 or 11, **characterized in that** a switching on of the motor (3) for travel out of the respective intermediate valve position is carried out by means of a start up pulse from a higher-level authority of the heating device management.
